# EUROPÄISCHE PATENTSCHRIFT

(11) **EP 3 138 151 B1**
(45) Veröffentlichungstag und Bekanntmachung des Hinweises auf die Patenterteilung: **03.10.2018**
(21) Anmeldenummer: 15716479.9
(22) Anmeldetag: 09.04.2015
(51) Int. Cl.: H01M 12/06, H01M 12/08, H01M 4/04, H01M 4/36, H01M 4/38, H01M 4/46, H01M 6/04, H01M 10/04, H01M 10/42, H01M 10/48, H01M 2/08, H01M 2/30, H01M 16/00, H01M 4/02, H01M 2/40, H01M 6/50

(54) **ANODE UND ELEKTROLYT FÜR EINE METALL-LUFT-BATTERIE**
ANODE AND ELECTROLYTE FOR A METAL-AIR BATTERY
ANODE ET ÉLECTROLYTE POUR UNE PILE MÉTAL/AIR

(30) Priorität: 29.04.2014 DE 102014208047
(43) Veröffentlichungstag der Anmeldung: 08.03.2017
(73) Patentinhaber: Mahle International GmbH, 70376 Stuttgart (DE)
(72) Erfinder: ENGLERT, Peter, 74177 Bad Friedrichshall (DE)
(74) Vertreter: BRP Renaud & Partner mbB Rechtsanwälte Patentanwälte Steuerberater
(86) Internationale Anmeldenummer: PCT/EP2015/057742
(87) Internationale Veröffentlichungsnummer: WO 2015/165707

(56) Entgegenhaltungen:
- WO-A1-2014/028001
- WO-A2-2014/037851
- CN-A- 102 586 818
- JP-A- S57 105 979
- US-A- 3 673 116
- US-A- 4 968 568
- US-A1- 2014 072 886

## Beschreibung

Die vorliegende Erfindung betrifft eine Metall-Luft-Batterie, insbesondere eine Aluminium-Luft-Batterie, mit den Merkmalen des Oberbegriffs des Anspruchs 1.

Metall-Luft-Batterien sind in der Regel Primärzellen, also elektrisch nicht wiederaufladbare galvanische Zellen, die eine bestimmte elektrische Spannung durch eine chemische Reaktion des jeweiligen Metalls mit Luftsauerstoff erzeugen. Eine derartige Primärzelle kann auch als Brennstoffzelle bezeichnet werden. Im Unterschied zu Primärzellen sind Sekundärzellen sogenannte Akkumulatoren, elektrisch wiederaufladbar.

Ein exemplarischer Aufbau für eine Zink-Luft-Batterie ist aus der WO 2012/156972 A1 bekannt.

Aus der WO 2013/150519 A1 ist eine Zink-Elektrode für eine Verwendung in einer wiederaufladbaren Batterie bekannt.

Aus der WO 2013/128445 A1 ist eine Metall-Luft-Batterie bekannt, bei der verbrauchter Brennstoff, nämlich Zink, mit Hilfe eines Verflüssigungsmittels abgeführt wird.

Aus der WO 2013/150520 A1 ist es für eine Metall-Luft-Batterie bekannt, ein Elektrolyt mit einer Waschlösung auszuspülen, um die Batterie in einen Standby-Modus zu überführen.

Aus der WO 2013/150521 A1 ist es für eine Metall-Luft-Batterie bekannt, einen Elektrolyten bedarfsabhängig zu erneuern.

Aus der WO 2014/009951 A1 ist es bekannt, eine Metall-Luft-Batterie mit einem wiederaufladbaren elektrischen Energiespeicher, also mit einem Akkumulator zu koppeln, derart, dass variierende Leistungsanforderungen durch eine entsprechende Verteilung der Leistungsanforderung auf die Metall-Luft-Batterie und den jeweiligen Akkumulator erreicht wird. Hierdurch ist die Metall-Luft-Batterie mit dem Akkumulator gepuffert und die Metall-Luft-Batterie kann relativ konstant betrieben werden, da Leistungsschwankungen durch den Akkumulator ausgleichbar sind.

Steuerungen für aufladbare Batterien sind aus der DE 11 2010 002 707 T5, aus der DE 11 2009 000 223 T5, aus der DE 10 2011 002 549 A1, aus der DE 10 2013 107 033 A1 und aus der DE 24 17 571 A bekannt.

Eine gattungsgemäße Metall-Luft-Batterie ist aus der WO 2014/037851 A2 bekannt. Sie besitzt zwischen Kathode und Anode ein Elektrolyt, das aus einer wässrigen Säure oder wässrigen Lauge besteht, die wenigstens ein Halogen und wenigstens ein Tensid enthält. Bei der bekannten Batterie handelt es sich um eine Sekundärzelle.

Aus der US 4 968 568 ist eine als Primärzelle ausgestaltete und mit festem Elektrolyt ausgestattete thermische Batterie bekannt, deren Anode mit Natrium gebildet ist, dem ein Pulver aus einem Schutzmetall zugemischt ist. Als Schutzmetalle kommen dabei Aluminium, Magnesium, Zink und Legierungen davon in Betracht.

Metall-Luft-Batterien können für einen Einsatz in Elektrofahrzeugen von hohem Interesse sein, da sie eine sehr hohe chemische Energiedichte aufweisen. Mit Hilfe von derartigen Metall-Luft-Batterien kann somit eine Reichweite eines Elektrofahrzeugs im Vergleich zu Akkumulatoren signifikant erhöht werden.

Problematisch bei Metall-Luft-Batterien ist die Realisierung einer Leistungssteuerung, die eine fahrzeuggerechte dynamische Anpassung der mit Hilfe der Metall-Luft-Batterie lieferbaren elektrischen Energie an die aktuell vom Fahrzeug benötigte elektrische Energie ermöglicht. Bei Fahrzeugen mit elektromotorischem Antrieb ist die benötigte elektrische Energie starken Schwankungen unterworfen, was sich aus dem üblicherweise in stationären Fahrbetrieb ergibt. Erfolgt die Auslegung der Metall-Luft-Batterie auf eine hohe Leistung, reduziert sich die Lebensdauer der Batterie auch dann, wenn nur vergleichsweise wenig Leistung benötigt wird. Demnach ist üblicherweise eine aufwändige Leistungssteuerung, z.B. in Verbindung mit einem Akkumulator als Leistungspuffer, erforderlich.

Die vorliegende Erfindung beschäftigt sich mit dem Problem, für eine Metall-Luft-Batterie bzw. für ein zugehöriges Betriebsverfahren bzw. für ein damit ausgestattetes Fahrzeug eine verbesserte Ausführungsform anzugeben, die sich insbesondere durch einen hohen Wirkungsgrad und/oder eine hohe Lebensdauer für die Batterie auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Gemäß einem ersten unabhängigen Aspekt der Erfindung weist die Anode einen Anodenkörper auf, der in einer Natrium-Matrix Partikel aus einer Aluminiumlegierung enthält. In Verbindung mit einem Elektrolyt, das Wasser enthält, kommt es bei einem Kontakt von Natrium mit Wasser üblicherweise zu einer heftigen Reaktion, die in diesem Fall jedoch durch die Aluminiumpartikel phlegmatisiert ist. Dennoch ergibt sich eine gute Löslichkeit der Anode bzw. des Anodenkörpers im jeweiligen Elektrolyt, was eine hohe elektrische Leistung ermöglicht. Mit der erfindungsgemäß vorgeschlagenen Anode lässt sich der energetische Wirkungsgrad der Matall-Luft-Batterie verbessern.

Bevorzugt ist eine Ausführungsform, bei welcher die Partikel eine Partikelgröße von 10 µm bis 100 µm, vorzugsweise von 40 µm bis 60 µm aufweisen. Besonders vorteilhaft ist eine Ausführungsform, bei welcher die Partikel eine Partikelgröße von etwa 50 µm aufweisen. Durch die gewählte Partikelgröße ergibt sich eine vergleichsweise große Oberfläche für die Aluminiumlegierung, was die gewünschte Elektrolysereaktion begünstigt.

Bei einer anderen vorteilhaften Ausführungsform kann ein Anteil von Partikeln im Anodenkörper in einem Bereich von 40% bis 80%, vorzugsweise von 60% bis 70%, liegen. Besonders vorteilhaft ist dabei eine Ausführungsform, bei welcher der Anteil an Partikeln im Anodenkörper bei etwa 65% liegt. Die vorstehenden Prozentangaben beziehen sich dabei auf Gewichtsprozent. Der verbleibende Anteil im Anodenkörper wird dann durch die Natriummatrix gebildet. Bei 65% Partikelanteil besitzt die Matrix demnach einen Anteil von 35% im Anodenkörper.

Von besonderer Bedeutung ist eine Ausführungsform, bei welcher die Aluminiumlegierung Zirkon enthält. Durch das Zulegieren von Zirkon zum Aluminium lässt sich die Bildung einer Passivschicht an der dem Elektrolyten ausgesetzten Oberfläche der Anode gerade so weit verhindern, dass eine Bildung von Wasserstoff nicht bevorzugt ist, während gleichzeitig ein Verlust durch die Durchtrittsüberspannung signifikant reduziert ist. Die Elektrolyse an der Anodenoberfläche führt zu einer Passivierung der Anodenoberfläche, die eine Durchtrittsüberspannung definiert. Je größer die Passivschicht, desto höher die Durchtrittsüberspannung, die erforderlich ist, die Passivschicht zu durchdringen. Durch die Zugabe von Zirkon lässt sich somit die Ausbildung der Passivschicht reduzieren, was die Durchtrittsüberspannung senkt. Wichtig ist, dass durch die Zulegierung von Zirkon die Ausbildung der Passivschicht nicht vollständig unterbunden wird. Das Fehlen der Passivschicht würde bei Aluminium dazu führen, dass sich das Aluminium schon beim Kontakt mit Wasser unter Ausbildung von Wasserstoff zersetzt. Eine derart starke Wasserstoffbildung im Elektrolyt ist jedoch innerhalb der Metall-Luft-Batterie unerwünscht.

Entsprechend einer vorteilhaften Weiterbildung kann die Aluminiumlegierung 0,01% bis 1,00% Zirkon enthalten, bevorzugt ist ein Gehalt von 0,05% bis 0,80% Zirkon. Besonders vorteilhaft ist ein Gehalt von etwa 0,5% Zirkon. Insbesondere ist der Rest der Aluminiumlegierung abgesehen von den üblichen, unvermeidbaren Verunreinigungen, durch Aluminium gebildet. Auch hier beziehen sich die Prozentangaben auf Gewichtsprozent.

Zum Herstellen einer derartigen Anode wird außerdem ein Verfahren vorgeschlagen, bei dem ein Granulat aus einer Aluminiumlegierung in eine Schmelze aus Natrium eingebracht wird und bei dem anschließend eine Anode bzw. ein Anodenkörper aus dieser Natriumschmelze mit darin eingebrachtem Aluminiumgranulat gegossen wird. Insbesondere lassen sich dadurch stabförmige, zylindrische Anodenkörper realisieren.

Erfindungsgemäß wird außerdem vorgeschlagen, einen Festkörper, der in einer Matrix aus Natrium Partikel aus einer Aluminiumlegierung enthält, als Anodenkörper einer Anode einer Metall-Luft-Batterie zu verwenden.

Entsprechend einem zweiten unabhängigen Aspekt der Erfindung ist das Elektrolyt für eine Metall-Luft-Batterie durch eine wässrige Säure oder wässrige Lauge gebildet, die wenigstens ein Halogen und wenigstens ein Tensid enthält. Bevorzugt ist eine wässrige Lauge. Mit Hilfe des jeweiligen Halogens lässt sich die chemische Reaktion an der Anodenoberfläche verbessern, da durch die Zugabe des Halogens die Säure bzw. die Lauge die Passivschicht der jeweiligen Metallanode besser durchdringen kann. Durch die Zugabe des jeweiligen Tensids lässt sich die elektrochemische Reaktion verbessern, da das Tensid den Elektronenaustausch an der Anodenoberfläche mit dem Elektrolyt verbessert. Des Weiteren bewirkt das Tensid eine verbesserte Auflösung der sich bei der Reaktion ausbildenden Gase, was ebenfalls die elektrochemische Reaktion verbessert. Das erfindungsgemäße Elektrolyt führt somit ebenfalls zu einer Verbesserung des energetischen Wirkungsgrads der Metall-Luft-Batterie.

Vorteilhaft weist die jeweilige Säure oder Lauge einen 10%igen bis 40%igen Anteil im Wasser auf. Bevorzugt handelt es sich um eine 20%ige Säure oder Lauge ±5%. Die Prozentangaben beziehen sich hierbei wieder auf Gewichtsprozent.

Gemäß einer vorteilhaften Ausführungsform kann das Halogen 0,1% bis 4%, vorzugsweise 0,5% bis 2%, in der Säure oder Lauge betragen. Auch hier handelt es sich um Gewichtsprozent. Bevorzugt handelt es sich beim Halogen um ein Fluorid, insbesondere um Kaliumaluminiumfluorid.

Bei einer anderen Ausführungsform kann die Säure bzw. Lauge das Tensid in einer Konzentration von 0,1% bis 2%, vorzugsweise in einer Konzentration von 0,2% bis 1% enthalten. Bevorzugt handelt es sich beim Tensid um Natriumlaurylsulfat.

Erfindungsgemäß wird außerdem vorgeschlagen, eine Zusammensetzung, die aus einer wässrigen Säure oder wässrigen Lauge besteht, die wenigstens ein Halogen und wenigstens ein Tensid enthält, als Elektrolyt einer Metall-Luft-Batterie, vorzugsweise einer Aluminium-Luft-Batterie, zu verwenden.

Bei einer ersten erfindungsgemäßen Metall-Luft-Batterie, die bevorzugt als Aluminium-Luft-Batterie ausgestaltet sein kann, ist vorgesehen, die wenigstens eine Anode in der vorstehend beschriebenen Art auszugestalten. Bei einer zweiten erfindungsgemäßen Metall-Luft-Batterie, die bevorzugt als Aluminium-Luft-Batterie ausgestaltet sein kann, ist vorgesehen, das Elektrolyt in der vorstehend beschriebenen Art auszugestalten. Bevorzugt ist dabei eine Ausführungsform, bei welcher die Metall-Luft-Batterie, die bevorzugt als Aluminium-Luft-Batterie ausgestaltet ist, zumindest eine Anode der vorstehend beschriebenen Art sowie ein Elektrolyt der vorstehend beschriebenen Art aufweist.

Vorzugsweise kann eine derartige Metall-Luft-Batterie hinsichtlich ihres Aufbaus auf dem allgemeinen Gedanken beruhen, eine metallische Anode in einer hohlzylindrischen Kathode anzuordnen, die ihrerseits in einem Gehäuse der Batterie angeordnet ist. Radial zwischen Anode und Kathode befindet sich ein Elektrolytraum. Radial zwischen Kathode und Gehäuse befindet sich ein Luftraum. Hierdurch ergibt sich für die Batterie ein extrem kompakter Aufbau, wodurch eine hohe Leistungsdichte realisierbar ist. Des Weiteren ermöglicht dieser Aufbau eine besonders günstige Strömungsführung für das Elektrolyt einerseits und für die Luft andererseits. So ist ein durch das Gehäuse führender Luftpfad vorgesehen, der von einem Lufteinlass des Gehäuses, der mit dem Luftraum fluidisch verbunden ist, zu einem Luftauslass des Gehäuses führt, der mit dem Luftraum fluidisch verbunden ist. Mit Hilfe einer Luftversorgungseinrichtung lässt sich somit ein dem Luftpfad folgender, die Kathode beaufschlagender Luftstrom erzeugen. Ferner ist ein durch das Gehäuse führender Elektrolytpfad vorgesehen, der von einem Elektrolyteinlass des Gehäuses, der mit dem Elektrolytraum fluidisch verbunden ist, zu einem Elektrolytauslass des Gehäuses führt, der mit dem Elektrolytraum fluidisch verbunden ist. Mit Hilfe einer Elektrolytversorgungseinrichtung lässt sich nun ein dem Elektrolytpfad folgender, die Anode und die Kathode beaufschlagender Elektrolytstrom erzeugen. Durch die koaxiale Anordnung von Gehäuse, Luftraum, Kathode, Elektrolytraum und Anode lassen sich für den Luftpfad und für den Elektrolytpfad geringe Strömungswiderstände realisieren, so dass sich insbesondere große Volumenströme für die Luft entlang des Luftpfads einerseits und für das Elektrolyt entlang des Elektrolytpfads andererseits realisieren lassen. Somit kann besonders einfach an der Kathode ausreichend Sauerstoff nachgeliefert werden. An der Anode lässt sich außerdem ausreichend unverbrauchtes Elektrolyt nachliefern bzw. verbrauchtes Elektrolyt abführen. Unter einer "Beaufschlagung" eines Körpers durch ein Fluid wird im vorliegenden Zusammenhang eine Kontaktierung des beaufschlagten Körpers durch das jeweilige Fluid verstanden, unabhängig davon, ob das Fluid mittels Überdruck zugeführt oder mittels Unterdruck angesaugt wird.

Ferner ist es insbesondere möglich, die Luftversorgungseinrichtung so auszugestalten, dass der Volumenstrom an Luft entlang des Luftpfads in einem relativ großen Bereich einstellbar, also variierbar ist. Ebenso lässt sich die Elektrolytversorgungseinrichtung einfach so ausgestalten, dass der Volumenstrom des Elektrolyts in einem relativ großen Bereich einstellbar, also variierbar ist. Auf diese Weise lässt sich die an der Metall-Luft-Batterie abgreifbare elektrische Leistung besonders einfach hydraulisch durch Variieren des Elektrolytstroms und/oder pneumatisch durch Variieren des Luftstroms einstellen.

Die Metall-Luft-Batterie ist entsprechend einer bevorzugten Ausführungsform als Aluminium-Luft-Batterie ausgestaltet, so dass die Anode einen dem Elektrolyt ausgesetzten Anodenkörper aufweist, der eine Aluminiumlegierung aufweist oder daraus besteht.

Gemäß einer vorteilhaften Ausführungsform kann eine Steuereinrichtung zum Betreiben der Metall-Luft-Batterie vorgesehen sein, die einerseits mit der Luftversorgungseinrichtung und andererseits mit der Elektrolytversorgungseinrichtung elektrisch verbunden ist. Die Steuereinrichtung kann nun so ausgestaltet bzw. programmiert sein, dass sie in Abhängigkeit einer aktuellen elektrischen Leistungsanforderung an die Metall-Luft-Batterie die Luftversorgungseinrichtung zum Erzeugen eines an diese Leistungsanforderung angepassten Luftstroms ansteuert und/oder die Elektrolytversorgungseinrichtung zum Erzeugen eines an diese Leistungsanforderung angepassten Elektrolytstroms ansteuert. Durch Variieren des Volumenstroms an Elektrolyt und/oder Luft lässt sich die an der Metall-Luft-Batterie abgreifbare elektrische Leistung variieren. Da sich die Volumenströme von Luft und/oder Elektrolyt vergleichsweise einfach und vergleichsweise rasch in einem relativ großen Bereich variieren lassen, lässt sich durch die hier vorgestellte Vorgehensweise die an der Metall-Luft-Batterie abgreifbare elektrische Leistung relativ rasch an die aktuell angeforderte Leistung anpassen. Insbesondere kann die an der Metall-Luft-Batterie bereitgestellte, abgreifbare Leistung durch Reduzieren des Luftstroms und/oder Elektrolytstroms auch in kurzer Zeit an kleine Leistungsanforderungen anpassen, wodurch die Lebensdauer der Metall-Luft-Batterie signifikant verlängert werden kann. Die hier vorgestellte Leistungssteuerung bzw. Leistungsregelung arbeitet hydraulisch bzw. hydropneumatisch.

Insbesondere kann die Steuereinrichtung eine Leistungsregelung realisieren, wobei sie die aktuelle Leistungsanforderung als Sollwert berücksichtigt und eine aktuell an elektrischen bzw. galvanischen Stromanschlüssen der Metall-Luft-Batterie gemessene elektrische Leistung als Istwert berücksichtigt. Durch einen Soll-Ist-Vergleich kann die Steuereinrichtung den Volumenstrom für das Elektrolyt und/oder für die Luft entsprechend nachführen.

Entsprechend einer anderen vorteilhaften Weiterbildung kann die Steuereinrichtung so ausgestaltet bzw. programmiert sein, dass sie in Abhängigkeit der aktuellen Leistungsanforderung die Elektrolytversorgungseinrichtung zum Erzeugen des an diese Leistungsanforderung angepassten Elektrolytstroms ansteuert und die Luftversorgungseinrichtung zum Erzeugen eines an den angepassten Elektrolytstrom angepassten Luftstroms ansteuert. Mit anderen Worten, die Steuereinrichtung ermittelt zunächst in einem ersten Schritt den für die aktuelle Leistungsanforderung benötigten Volumenstrom an Elektrolyt und steuert die Elektrolytversorgungseinrichtung entsprechend an. In einem zweiten Schritt, der quasi simultan zum vorstehend genannten ersten Schritt ablaufen kann, ermittelt die Steuereinrichtung abhängig vom ermittelten Elektrolytvolumenstrom einen hierfür benötigten Luftvolumenstrom und steuert die Luftversorgungseinrichtung entsprechend an.

Bei einer anderen vorteilhaften Weiterbildung kann vorgesehen sein, dass die Steuereinrichtung so ausgestaltet bzw. programmiert ist, dass sie zum Ausschalten der Metall-Luft-Batterie die Elektrolytversorgungseinrichtung zum Entleeren des Elektrolytpfads von Elektrolyt ansteuern. Durch eine derartige Entleerung des Elektrolytpfads, insbesondere des Elektrolytraums, wird die chemische Reaktion zwischen Anode und Elektrode in der Metall-Luft-Batterie vollständig unterbrochen, wodurch die Zersetzung bzw. Auflösung der Anode stark reduziert ist. Dementsprechend verlängert sich die Lebenszeit der Batterie.

Bei einer anderen vorteilhaften Ausführungsform kann die Anode am Gehäuse um ihre Längsmittelachse drehbar gelagert sein. Durch die Verdrehbarkeit der Anode relativ zum Gehäuse lässt sich eine Rotation der Anode bezüglich des stehenden Gehäuses realisieren. Die Anode dreht dabei auch relativ zur Kathode, die bezüglich des Gehäuses drehfest ist. Die rotierende Anode verbessert die Umströmung der Anode mit Elektrolyt. Gleichzeitig können sich Reaktionsprodukte aufgrund von Zentrifugalkräften besser von der Anode lösen, was die für die Elektrolyse zur Verfügung stehende Oberfläche der Anode vergrößert.

Sofern die Anode drehbar im Gehäuse angeordnet ist, kann grundsätzlich ein entsprechender Drehantrieb, zum Beispiel durch einen Elektromotor, vorgesehen sein, um die Anode in Rotation zu versetzen. Alternativ kann vorgesehen sein, dass die Anode so ausgestaltet ist, dass eine Rotation der Anode das Elektrolyt im Elektrolytpfad antreibt. Hierdurch erhält die Anode eine Zusatzfunktion. Besonders vorteilhaft ist dabei eine Weiterbildung, bei der die Anode an ihrer dem Elektrolytraum ausgesetzten Außenseite Strömungsleitstrukturen aufweist, die bei drehender Anode das Elektrolyt antreiben. Denkbar sind, insbesondere schraubenförmig angeordnete, Laufschaufeln.

Gemäß einer anderen Ausführungsform kann vorgesehen sein, dass die Anode durch den Elektrolytstrom, also hydraulisch angetrieben ist. Hierzu ist der Elektrolytpfad so an der Anode vorbeigeführt, dass der Elektrolytstrom die Anode drehend antreibt. Somit wird die kinetische Energie des Elektrolytstroms genutzt, um die Anode in Rotation zu versetzen. Auf einen zusätzlichen, energieverbrauchenden Elektroantrieb kann somit verzichtet werden.

Gemäß einer vorteilhaften Weiterbildung kann der Elektrolyteinlass an einem ersten Endbereich des Elektrolytraums tangential zum Elektrolytraum angeordnet sein, während der Elektrolytauslass an einem zweiten Endbereich des Elektrolytraums, insbesondere axial, angeordnet ist. Durch die beabstandete Anordnung von Elektrolyteinlass und Elektrolytauslass wird eine quasi axiale Durchströmung des Elektrolytraums für das Elektrolyt realisiert. Durch die tangentiale Anordnung des Elektrolyteinlasses ergibt sich im Elektrolytraum eine schraubenförmige Durchströmung, die auch als Drallströmung bezeichnet werden kann. Durch Oberflächenreibung führt die Drallströmung zu einer Drehbewegung der Anode. Die tangentiale Anordnung ist dabei in einem Querschnitt des Luftraums bzw. der Kathode zu finden, der senkrecht zur Längsmittelachse der Kathode verläuft.

Zusätzlich oder alternativ kann die Anode an ihrer dem Elektrolytraum ausgesetzten Außenseite Strömungsleitstrukturen aufweisen, die ein Drehmoment auf die Anode übertragen, wenn die Anode mit dem Elektrolytstrom beaufschlagt ist. Somit lässt sich gezielt kinetische Energie des Elektrolytstroms zum Antreiben der Anode nutzen.

Die Rotation der Anode kann durch einen entsprechenden Volumenstrom des Elektrolyts mit einer vergleichsweise hohen Drehzahl erfolgen, die insbesondere so hoch gewählt sein kann, dass ausreichend Zentrifugalkräfte erzeugt werden, die ein Ablösen von Reaktionsprodukten von der Anode ermöglichen. Denkbar sind beispielsweise Drehzahlen bis 300 Umdrehungen pro Minute.

Das Gehäuse ist zweckmäßig isoliert bzw. aus einem elektrisch isolierten Material hergestellt, beispielsweise aus Kunststoff. Die Anordnung der Anode im Gehäuse erfolgt vorteilhaft so, dass sich die Längsmittelachse der Anode und somit auch eine Längsmittelachse der Kathode im Gebrauchszustand der Batterie im Wesentlichen vertikal erstreckt.

Gemäß einer anderen vorteilhaften Ausführungsform kann die Anode bzw. ein Anodenkörper zylindrisch ausgestaltet sein und mit einer metallischen Tragplatte mechanisch und elektrisch verbunden sein. Durch diese Bauform lässt sich die Anode einfacher im Gehäuse positionieren, z.B. koaxial in der Kathode.

Entsprechend einer vorteilhaften Ausführungsform kann die insbesondere kreisförmige Tragplatte über ein Axiallager am Gehäuse um eine Längsmittelachse der Anode drehbar gelagert sein. Somit ist die Anode im Bereich ihrer Tragplatte drehbar am Gehäuse gelagert. Die Tragplatte kann aus einer anderen Metalllegierung hergestellt sein als die Anode, wodurch die Ausbildung einer geeigneten Lagerung im Bereich der Tragplatte vereinfacht ist. Durch das Axiallager lassen sich Axialkräfte besonders einfach zwischen der Anode und dem Gehäuse abstützen. Das Axiallager kann beispielsweise an einer axialen Stirnseite des Gehäuses angeordnet sein, die im Betriebszustand der Batterie oben angeordnet ist.

Bei einer anderen Weiterbildung kann ein anodenseitiger galvanischer Stromanschluss der Metall-Luft-Batterie, der einen elektrischen Minuspol repräsentiert, am Axiallager ausgebildet sein. Das Axiallager besitzt einen fest mit dem Gehäuse verbundenen Bereich, der auch als stationärer Bereich bezeichnet werden kann, und der sich in besonderer Weise für die Ausbildung des anodenseitigen Stromanschlusses eignet. Hierdurch ist besagter anodenseitiger Stromanschluss stationär, obwohl die Anode selbst relativ zum Gehäuse drehbar ist. Hierdurch vereinfacht sich die Stromabnahme an der Batterie.

Gemäß einer anderen Weiterbildung kann das Axiallager als Gleitlager ausgestaltet sein und einen Gleitmetallring aufweisen, der in einer gehäuseseitigen, ringförmigen Lagerschale liegt und auf dem die Tragplatte aufliegt und auf dem die Tragplatte bei drehender Anode gleitet. Durch die Ausgestaltung des Axiallagers als Gleitlager kann eine vergleichsweise große Kontaktfläche zwischen Tragplatte und Axiallager bzw. Gleitmetallring realisiert werden, was die Stromübertragung zwischen Anode und Axiallager vereinfacht.

Besonders vorteilhaft ist eine Ausführungsform, bei welcher der Gleitmetallring einen Ringkörper aus einer Gleitmetalllegierung und zumindest einen im Ringkörper angeordneten, vorzugsweise metallischen Heizleiter aufweist, mit dem der Ringkörper aufheizbar ist. Durch Aufheizen des Ringkörpers lässt sich die Stromübertragung zwischen Gleitmetallring und Tragplatte verbessern.

Besonders vorteilhaft ist eine Weiterbildung, bei der eine Stromversorgung des Heizleiters so ausgestaltet ist, dass der Heizleiter den Ringkörper auf eine vorbestimmte Betriebstemperatur aufheizt, die unterhalb eines Schmelzpunkts der Gleitmetalllegierung liegt und dabei so nah am Schmelzpunkt der Gleitmetalllegierung liegt, dass am Ringkörper ein Oberflächenschmelzen auftritt. Die Gleitmetalllegierung ist dabei eine nieder-schmelzende Legierung, deren Schmelzpunkt beispielsweise zwischen 50°C und 300°C liegen kann. Die vorbestimmte Betriebstemperatur liegt beispielsweise 10% bis 15% unterhalb der Schmelztemperatur, insbesondere etwa 40°C unterhalb des Schmelzpunkts. Durch das so herbeigeführte Oberflächenschmelzen entsteht an der Oberfläche des Gleitmetallrings ein Flüssigmetallfilm, auf dem die Tragplatte nach Art eines Hydrolagers gleitet. Zum einen wird dadurch die Reibung zwischen Tragplatte und Gleitmetallring signifikant reduziert. Zum anderen ergibt sich durch den Flüssigmetallfilm eine signifikant verbesserte elektrische Kontaktierung. Beispielsweise kann im Flüssigmetallfilm eine Oxidschichtbildung der miteinander in Kontakt stehenden Oberflächen reduziert werden. Durch die hier vorgestellte Ausgestaltung lässt sich somit eine extrem verlustarme elektrische Kontaktierung zwischen Tragplatte und Axiallager realisieren, wodurch hohe Ströme bei geringen Spannungen realisierbar sind.

Die Steuerung der Stromversorgung des Heizleiters, mit deren Hilfe die gewünschte Betriebstemperatur im Ringkörper eingestellt werden kann, kann beispielsweise über eine Temperaturmessung erfolgen. Ebenso ist denkbar, den jeweiligen Heizleiter mit einem PTC-Element in Reihe zu schalten, wobei PTC für Positive Temperature Coefficient steht. Das jeweilige PTC-Element ist dabei auf die gewünschte Betriebstemperatur abgestimmt. Auf diese Weise wird ohne großen elektronischen Aufwand eine selbstregelnde Aufheizung des jeweiligen Heizleiters geschaffen, über die der Ringkörper gezielt auf die vorbestimmte Betriebstemperatur aufgeheizt werden kann.

Die Stromversorgung des jeweiligen Heizleiters kann zweckmäßig in einen Strompfad zwischen der Anode und dem anodenseitigen galvanischen Stromanschluss eingebunden sein.

Bei einer anderen vorteilhaften Ausführungsform kann die Luftversorgungseinrichtung stromauf des Lufteinlasses eine Konzentrationseinrichtung aufweisen, die den Sauerstoffanteil im Luftstrom erhöht. Somit erfolgt eine Anreicherung des Luftstroms hinsichtlich des mitgeführten Sauerstoffs, was die Elektrolysefunktion an der Kathode entsprechend verbessert. Eine derartige Konzentrationseinrichtung kann beispielsweise mit einer entsprechenden Filtermembran oder mit einem entsprechenden Molekularsieb ausgestattet sein, wodurch an der einen Seite der Stickstoffanteil zunimmt und der Sauerstoffanteil abnimmt, während an der anderen Seite der Stickstoffanteil abnimmt und der Sauerstoffanteil zunimmt. Beispielsweise lässt sich mit Hilfe einer derartigen Konzentrationseinrichtung der natürliche Sauerstoffgehalt von etwa 20% in Luft auf über 90% erhöhen.

Sofern hier ein Filtermedium zum Einsatz kommt, das periodisch regeneriert werden muss, umfasst die Konzentrationseinrichtung zwei oder mehr Konzentrationseinheiten, so dass permanent eine Erhöhung des Sauerstoffanteils über wenigstens eine Konzentrationseinheit durchführbar ist, während gleichzeitig eine andere Konzentrationseinheit regeneriert wird.

Bei einer anderen vorteilhaften Ausführungsform kann die Elektrolytzuführeinrichtung einen Elektrolytkreis aufweisen, der einen Vorlauf und einen Rücklauf aufweist. Der Vorlauf führt dabei von einem Elektrolyttank zum Elektrolyteinlass, während der Rücklauf vom Elektrolytauslass zum Elektrolyttank führt. Durch die Verwendung eines derartigen geschlossenen Elektrolytkreises lässt sich das Elektrolyt dauerhaft verwenden. Insbesondere werden dadurch auch höhere Volumenströme für das Elektrolyt möglich, die so groß sind, dass das Elektrolyt beim Durchströmen des Elektrolytpfads nicht vollständig unbrauchbar wird.

Gemäß einer vorteilhaften Weiterbildung kann im Vorlauf eine Vorlaufpumpe zum Antreiben des Elektrolyts angeordnet sein. Über die Vorlaufpumpe lässt sich beispielsweise der aktuelle Volumenstrom an Elektrolyt, der durch den Elektrolytpfad geführt wird, einstellen.

Bei einer anderen Ausführungsform kann im Rücklauf eine Rücklaufpumpe zum Antreiben des Elektrolyts angeordnet sein. Die Rücklaufpumpe dient dazu, das Elektrolyt vom Elektrolytauslass zum Elektrolyttank zu fördern. Sie kann insbesondere auch dazu genutzt werden, den Elektrolytraum bzw. den Elektrolytpfad zu entleeren, z.B. in Verbindung mit einer ansteuerbaren Be- und Entlüftung des Elektrolytkreises.

Bei einer anderen Ausführungsform kann im Rücklauf eine Elektrolytreinigungseinrichtung zum Entfernen von Reaktionsprodukten aus dem Elektrolyt angeordnet sein. Eine derartige Elektrolytreinigungseinrichtung ist dabei zweckmäßig stromab der Rücklaufpumpe angeordnet und kann beispielsweise als Zentrifuge mit Membran ausgestaltet sein. Mit Hilfe der Elektrolytreinigungseinrichtung lässt sich eine Aufbereitung des vom Elektrolytraum kommenden Elektrolyts realisieren, derart, dass das aufbereitete Elektrolyt erneut dem Elektrolytraum zugeführt werden kann. Hierdurch wird der Verbrauch an Elektrolyt minimiert.

Bei einer anderen vorteilhaften Ausführungsform kann im Rücklauf eine Gasabscheideeinrichtung zum Entfernen von Gasen aus dem flüssigen Elektrolyt angeordnet sein. Bei der Elektrolysereaktion in der Metall-Luft-Batterie können Gase entstehen, insbesondere Wasserstoff. Die Gase sind aus dem flüssigen Elektrolyten abzuscheiden, beispielsweise, um die Effizienz der Elektrolysefunktion zu verbessern. Insbesondere soll auch eine Schaumbildung im Elektrolyt vermieden werden. Die Gasabscheideeinrichtung kann beispielsweise mit Düsen arbeiten, wodurch besonders große Gasbläschen im Elektrolyten gebildet werden, die sich relativ einfach ausscheiden lassen.

Gemäß einer vorteilhaften Weiterbildung kann die Gasabscheideeinrichtung über eine Gasleitung mit einer Umsetzeinrichtung zum Wandeln der chemischen Energie der abgeschiedenen Gase in elektrische und/oder thermische Energie fluidisch verbunden sein. Somit kann die chemische Energie des als Abfallprodukt anfallenden Gases genutzt werden, um den gesamten energetischen Wirkungsgrad der Metall-Luft-Batterie zu verbessern.

Entsprechend einer vorteilhaften Weiterbildung kann die Umsetzeinrichtung ein katalytischer Brenner sein, der beispielsweise ein Platinnetz aufweist. Der gasförmige Wasserstoff wird dabei mit Luftsauerstoff zu Wasser umgesetzt. Die dabei entstehende Wärme kann zum Aufheizen der Batterie genutzt werden. Alternativ dazu kann die Umsetzeinrichtung durch eine Wasserstoff-Luft-Brennstoffzelle gebildet sein, in der das Wasserstoffgas mit Sauerstoffgas zu elektrischem Strom und Wärme umgesetzt wird. Die Wärme kann wieder zum Aufheizen der Batterie genutzt werden. Die elektrische Energie lässt sich ebenfalls innerhalb der Metall-Luft-Batterie nutzen oder als zusätzliche elektrische Leistung nutzen. Eine geeignete Wasserstoff-Luft-Brennstoffzelle kann dabei als Niedertemperaturbrennstoffzelle oder PEM-Brennstoffzelle ausgestaltet sein, wobei PEM für Proton Exchange Membrane steht. Grundsätzlich ist auch eine Ausführung als Hochtemperaturbrennstoffzelle, insbesondere als SOFC-Brennstoffzelle denkbar, wobei SOFC für Solid Oxide Fuel Cell steht.

Die Wärmeübertragung zwischen der Umsetzeinrichtung und der übrigen Metall-Luft-Batterie kann beispielsweise mit Hilfe eines Wärmeübertragers erfolgen, der auf geeignete Weise in den Elektrolytkreis eingebunden ist. Auch lässt sich mit Hilfe dieses Wärmeübertragers überschüssige Wärme aus dem Elektrolyt herausziehen. Die Wärme lässt sich dann gezielt dazu nutzen, die Anode und/oder die Kathode aufzuheizen, um die Elektrolysereaktion zu verbessern.

Bei einer anderen vorteilhaften Ausführungsform kann der Lufteinlass tangential zum Luftraum angeordnet sein. Zusätzlich oder alternativ kann der Luftauslass tangential zum Luftraum angeordnet sein. Die tangentiale Anordnung des Lufteinlasses bzw. des Luftauslasses kann dazu genutzt werden, den Luftstrom innerhalb des Luftraums schraubenförmig, also als Drallströmung auszugestalten, wodurch sich eine verlängerte Verweildauer für den Luftstrom innerhalb des Luftraums einstellt. Hierdurch wird die Übertragung von Sauerstoff zwischen Luftstrom und Kathode verbessert.

Entsprechend einer anderen vorteilhaften Ausführungsform kann eine Induktionsheizung zum Aufheizen der Anode vorgesehen sein. Eine derartige Induktionsheizung arbeitet beispielsweise mittels wenigstens einer Induktionsspule, die ein stationäres, räumlich inhomogenes, elektromagnetisches Feld im Bereich der Anode erzeugt. Durch Bewegen bzw. Drehen der Anode in diesem elektromagnetischen Feld wird in der Anode, insbesondere in einem dem Elektrolytraum zugewandten Wandbereich, Wärme induziert, was die Elektrolysereaktion signifikant verbessert.

Die jeweilige Induktionsheizung kann dabei im Bereich der Kathode angeordnet sein, wodurch eine besonders kompakte Bauweise realisierbar ist. Mit Hilfe der Induktionsheizung lässt sich die Anode aufheizen, und zwar gezielt in dem dem Elektrolytraum zugewandten Wandbereich. Hierdurch wird nur vergleichsweise wenig Energie benötigt, um die eigentliche Reaktionszone aufzuheizen. Die erhöhte Temperatur in der Reaktionszone verbessert den energetischen Wirkungsgrad der Metall-Luft-Batterie.

Ein Batterie-System kann mehrere Metall-Luft-Batterien der vorstehend beschriebenen Art umfassen und charakterisiert sich durch eine gemeinsame Luftversorgungseinrichtung zum Erzeugen des jeweiligen Luftstroms durch die Luftpfade der Batterien und/oder durch eine gemeinsame Elektrolytversorgungseinrichtung zum Erzeugen des jeweiligen Elektrolytstroms durch die Elektrolytpfade der Batterien und/oder durch eine gemeinsame Steuereinrichtung zum Betreiben der Batterien. Die Batterien können dabei mit ihren Luftpfaden und/oder mit ihren Elektrolytpfaden fluidisch seriell oder parallel geschaltet sein. Durch diese Bauform vereinfacht sich die Realisierung eines leistungsfähigen Batterie-Systems. Insbesondere kann eine gemeinsame Luftfördereinrichtung für mehrere Batterien genutzt werden. Zusätzlich oder alternativ kann eine Elektrolytfördereinrichtung für mehrere Batterien genutzt werden. Zusätzlich oder alternativ vereinfacht sich auch die Steuerung bzw. Regelung des Batterie-Systems, da für mehrere Batterien eine gemeinsame Steuereinrichtung genutz werden kann.

Ein Fahrzeug, bei dem es sich bevorzugt um ein Straßenfahrzeug handeln kann, kann einen elektromotorischen Antrieb besitzen und kann mit wenigstens einer Metall-Luft-Batterie der vorstehend beschriebenen Art ausgestattet sein. Das Fahrzeug charakterisiert sich dabei insbesondere durch eine Leistungselektronik zur Stromversorgung des Elektroantriebs, die ungepuffert mit der jeweiligen Metall-Luft-Batterie gekoppelt ist. Eine elektrisch ungepufferte Kopplung entspricht einer direkten elektrischen Verbindung, die ohne Zwischenschaltung eines elektrischen Energiespeichers erfolgt, also insbesondere ohne die Zwischenschaltung eines Akkumulators erfolgt. Die Erfindung beruht hinsichtlich des Fahrzeugs somit auf dem allgemeinen Gedanken, die jeweilige Metall-Luft-Batterie direkt zur Stromversorgung des Elektroantriebs zu nutzen, so dass auf die Zwischenschaltung eines zusätzlichen elektrischen Energiespeichers, wie zum Beispiel eines Akkumulators, verzichtet werden kann.

Ein Verfahren zum Betreiben einer derartigen Batterie kann auf dem allgemeinen Gedanken beruhen, die elektrische Leistungsabgabe der Metall-Luft-Batterie hydraulisch bzw. pneumatisch zu steuern bzw. zu regeln. Mit anderen Worten, die Leistungssteuerung bzw. Leistungsregelung der Metall-Luft-Batterie erfolgt über eine gezielte Variation der Volumenströme des Elektrolyts und/oder der Luft. Eine derartige pneumatische bzw. hydraulische Leistungsregelung bzw. -steuerung lässt sich besonders einfach mit herkömmlichen Komponenten, wie zum Beispiel Gebläsen und/oder Pumpen, realisieren.

Dementsprechend kann gemäß einer vorteilhaften Ausführungsform vorgesehen sein, dass zum Anpassen des Elektrolytstroms wenigstens eine Elektrolytfördereinrichtung, z.B. eine geeignete Pumpe, entsprechend zum Erhöhen oder Reduzieren ihrer Förderleistung angesteuert wird. Zusätzlich oder alternativ kann vorgesehen sein, dass zum Anpassen des Luftstroms wenigstens eine Luftfördereinrichtung, z.B. ein geeignetes Gebläse, entsprechend zum Erhöhen oder zum Reduzieren ihrer Förderleistung angesteuert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Metall-Luft-Batterie ohne periphere Komponenten,
- Fig. 2: eine Ansicht wie in Fig. 1, jedoch mit peripheren Komponenten.

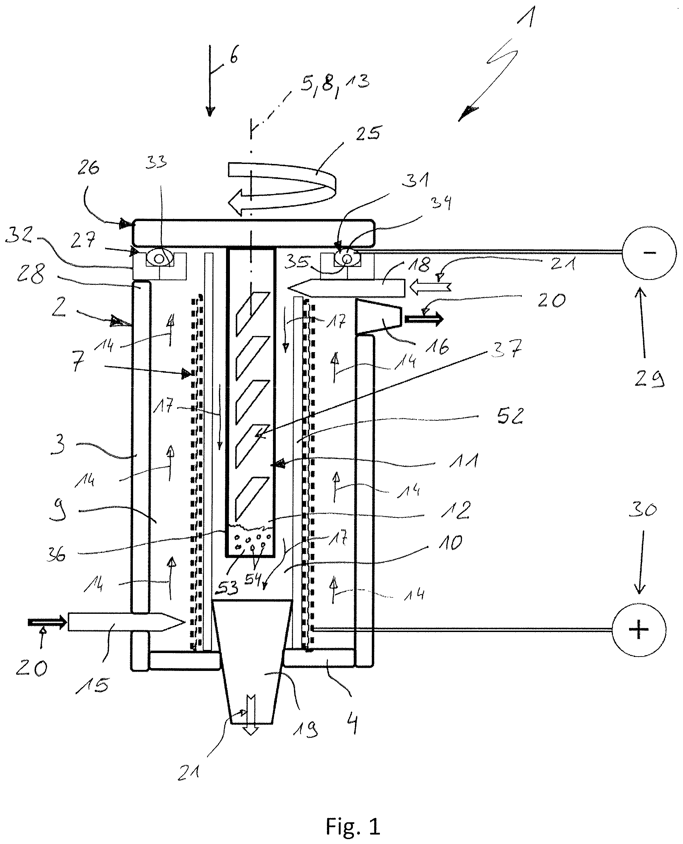

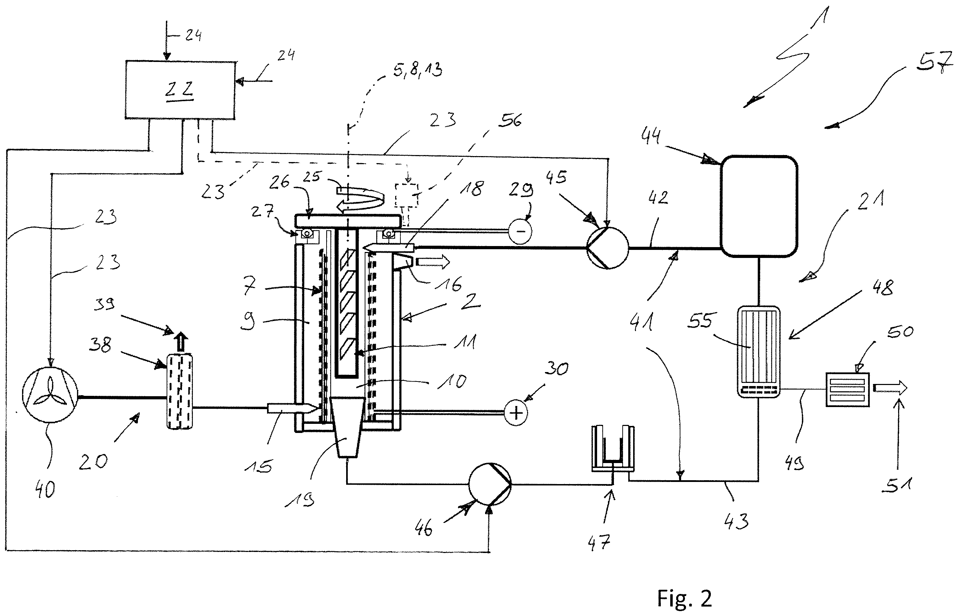

Entsprechend den Figuren 1 und 2 umfasst eine Metall-Luft-Batterie 1, bei der es sich bevorzugt um eine Aluminium-Luft-Batterie handelt, ein Gehäuse 2, das elektrisch isoliert ist und bevorzugt aus einem elektrisch isolierenden Material besteht, beispielsweise aus Kunststoff. Das Gehäuse 2 ist im gezeigten Beispiel als zylindrischer Behälter ausgestaltet und besitzt einen zylinderförmigen Mantel 3 sowie einen plattenförmigen, insbesondere kreisförmigen, Boden 4. Im Einbauzustand oder betriebsfertigen Zustand der Metall-Luft-Batterie 1, die im Folgenden auch verkürzt als Batterie 1 bezeichnet werden kann, ist das Gehäuse 2 so angeordnet, dass eine Längsmittelachse 5 des Gehäuses 2 im Wesentlichen vertikal, also im Wesentlichen parallel zur Schwerkraftrichtung 6, ausgerichtet ist, die in Fig. 1 durch einen Pfeil angedeutet ist. Die Batterie 1 umfasst des Weiteren zumindest eine hohlzylindrische Kathode 7, die im Gehäuse 2 angeordnet ist, und zwar vorzugsweise so, dass im betriebsfertigen Zustand der Batterie 1 eine Längsmittelachse 8 der Kathode 7 im Wesentlichen parallel zur Schwerkraftrichtung 6 verläuft. Im gezeigten Beispiel sind das Gehäuse 2 und die Kathode 7 koaxial und zueinander konzentrisch angeordnet, so dass die beiden Längsmittelachsen 5, 8 zusammenfallen. Die Kathode 7 trennt im Gehäuse 2 einen Luftraum 9 von einem Elektrolytraum 10. Die Kathode 7 besteht in üblicher Weise aus einem porösen Material, wodurch dem in der Regel flüssigen Elektrolyt eine große Oberfläche zur Verfügung gestellt wird, die eine Kontaktierung mit dem in der Luft enthaltenen gasförmigen Sauerstoff ermöglicht. Beispielsweise kann die Kathode aus einer permeablen Membran gebildet sein oder eine derartige aufweisen.

Ferner umfasst die Batterie 1 zumindest eine metallische Anode 11, die im Elektrolytraum 10 angeordnet ist. Die Anode 11 besitzt im Beispiel einen zylindrischen Anodenkörper 12 mit einer Längsmittelachse 13 und ist koaxial zur Kathode 7 und insbesondere dazu konzentrisch angeordnet. Dementsprechend fallen hier die Längsmittelachsen 5, 8, 13 zusammen.

Durch das Gehäuse 2 führt ein Luftpfad 14, der in Fig. 1 durch Pfeile angedeutet ist und der im Gehäuse 2 einen Lufteinlass 15 des Gehäuses 2 durch den Luftraum 9 hindurch mit einem Luftauslass 16 des Gehäuses fluidisch verbindet. Außerdem führt ein Elektrolytpfad 17 durch das Gehäuse 2, der in Fig. 1 durch Pfeile angedeutet ist und der einen Elektrolyteinlass 18 des Gehäuses 2 durch den Elektrolytraum 10 hindurch mit einem Elektrolytauslass 19 des Gehäuses 2 fluidisch verbindet.

Die Batterie 1 ist außerdem mit einer Luftversorgungseinrichtung 20 ausgestattet, mit deren Hilfe für den Betrieb der Batterie 1 ein Luftstrom erzeugt werden kann, der im Betrieb der Batterie 1 dem Luftpfad 14 folgt und dabei die Kathode 7 beaufschlagt, also anströmt bzw. umströmt. Außerdem ist eine Elektrolytversorgungseinrichtung 21 vorgesehen, mit deren Hilfe im Betrieb der Batterie 1 ein Elektrolytstrom erzeugt werden kann, der im Betrieb der Batterie 1 dem Elektrolytpfad 17 folgt und dabei einerseits die Anode 11 und andererseits die Kathode 7 beaufschlagt, also anströmt bzw. umströmt.

Zum Betreiben der Batterie 1 ist gemäß Fig. 2 eine Steuereinrichtung 22 vorgesehen, beispielsweise in Form eines Steuergeräts. Die Steuereinrichtung 22 ist mit der Luftversorgungseinrichtung 20 und mit der Elektrolytversorgungseinrichtung 21 elektrisch verbunden, beispielsweise über entsprechende Steuerleitungen 23. Die Steuereinrichtung 22 kann über entsprechende Signalleitungen 24 außerdem mit einer hier nicht näher dargestellten Sensorik der Batterie 1 elektrisch verbunden sein. Sofern die Batterie 1 in einem übergeordneten System, insbesondere in einem Fahrzeug, zur Bereitstellung elektrischer Energie zur Anwendung kommt, ist die Steuereinrichtung 22 über eine solche Steuerleitung 24 außerdem mit einer hier nicht gezeigten Steuerung des Systems bzw. des Fahrzeugs verbunden, so dass die Steuereinrichtung 22 den aktuellen elektrischen Leistungsbedarf des Systems, respektive des Fahrzeugs, kennt. Dieser aktuelle Leistungsbedarf entspricht dabei einer aktuellen Leistungsanforderung an die Batterie 1.

Die Steuereinrichtung 22 ist nun so ausgestaltet bzw. programmiert, dass sie abhängig von der aktuellen elektrischen Leistungsanforderung an die Batterie 1 die Luftversorgungseinrichtung 20 und/oder die Elektrolytversorgungseinrichtung 21 ansteuert, derart, dass die Luftversorgungseinrichtung 20 einen an die aktuelle Leistungsanforderung angepassten Luftstrom erzeugt und/oder dass die Elektrolytversorgungseinrichtung 21 einen an die aktuelle Leistungsanforderung angepassten Elektrolytstrom erzeugt. Vorzugsweise erfolgt die Ausgestaltung bzw. Programmierung der Steuereinrichtung 22 derart, dass sie abhängig von der aktuellen Leistungsanforderung zunächst in einem ersten Schritt einen dazu passenden Elektrolytstrom ermittelt, beispielsweise anhand von Kennlinien oder Kennfeldern oder anhand geeigneter Berechnungsformeln, und dann die Elektrolytversorgungseinrichtung 21 so ansteuert, dass diese den ermittelten Elektrolytstrom erzeugt. In einem zweiten Schritt, der quasi parallel ablaufen kann, kann die Steuereinrichtung 22 einen für den ermittelten Elektrolytstrom erforderlichen Luftstrom ermitteln, ebenfalls anhand von Kennlinien oder Kennfeldern oder mittels entsprechender Berechnungsformeln, so dass sie anschließend die Luftversorgungseinrichtung 20 zum Erzeugen des ermittelten Luftstroms ansteuern kann.

Die Steuereinrichtung 22 ermöglicht somit eine hydraulische bzw. hydropneumatische Leistungssteuerung bzw. Leistungsregelung der Batterie 1. Erhöht sich die Leistungsanforderung, werden die Volumenströme für Elektrolyt und Luft entsprechend erhöht. Reduziert sich dagegen die Leistungsanforderung, werden die Volumenströme für Elektrolyt und Luft entsprechend reduziert. Somit wird der Verschleiß der Batterie 1, also die Auflösung der Anode 11, minimiert. Die Batterie 1 besitzt dadurch eine vergleichsweise große Lebensdauer.

Die Steuereinrichtung 22 kann außerdem so programmiert bzw. ausgestaltet sein, dass sie beispielsweise zum Ausschalten der Batterie 1 die Elektrolytversorgungseinrichtung 21 so ansteuert, dass sie den Elektrolytraum 10 bzw. den gesamten Elektrolytpfad 17 von Elektrolyt entleert. Dem kann sich außerdem eine Spülung mit einem entsprechenden neutralen bzw. inerten Spülmedium anschließen.

Wie sich insbesondere Fig. 1 entnehmen lässt, kann die Anode 11 gemäß einer bevorzugten Ausführungsform am Gehäuse 2 um ihre Längsmittelachse 13 drehbar gelagert sein. Eine entsprechende Drehbewegung ist in den Figuren durch einen Drehpfeil 25 angedeutet. Durch die Drehbewegung der Anode 11 verbessert sich der Kontakt zwischen Anode 11 und Elektrolyt, was die elektrolytische Reaktion zur Stromerzeugung verbessert. Gleichzeitig kann die Rotation der Anode 11 bei entsprechenden Drehzahlen Fliehkräfte erzeugen, die ein Ablösen von Reaktionsprodukten von der Anode 11 bewirken können, was ebenfalls die Effizienz der Elektrolytreaktion verbessert. Die Anode 11 bzw. ihr Anodenkörper 12 ist an einer metallischen Tragplatte 26 angeordnet und mit dieser mechanisch und elektrisch verbunden. Insoweit kann die Tragplatte 26 auch zum Umfang der Anode 11 gezählt werden. Die Tragplatte 26 ist über ein Axiallager 27 am Gehäuse 2 um die Längsmittelachse 13 der Anode 11 drehbar gelagert. Das Axiallager 27 ist hierzu an einer vom Boden 4 abgewandten Stirnseite 28 des Gehäusemantels 3 angeordnet.

Die Batterie 1 besitzt zwei galvanische bzw. elektrische Stromanschlüsse 29, 30, nämlich einen ersten elektrischen Stromanschluss 29, der einen mit der Anode 11 elektrisch verbundenen Minuspol repräsentiert, sowie einen zweiten elektrischen Stromanschluss 30, der einen mit der Kathode 7 elektrisch verbundenen Pluspol repräsentiert.

Beim hier gezeigten, bevorzugten Beispiel ist der anodenseitige galvanische Stromanschluss 29 am Axiallager 27 ausgebildet bzw. damit fest verbunden, wodurch er bezüglich des Gehäuses 2 ortsfest ist und im Unterschied zur instationären bzw. rotierenden Anode 11 stationär bzw. drehfest angeordnet ist.

Das Axiallager 27 kann grundsätzlich als Wälzlager ausgestaltet sein. Bevorzugt ist jedoch die hier gezeigte Ausführungsform, bei der das Axiallager 27 als Gleitlager ausgestaltet ist. Insbesondere kann das Axiallager 27 hierzu einen Gleitmetallring 31 und eine ringförmige Lagerschale 32 aufweisen. Die Lagerschale 32 ist fest am Gehäuse 2 angeordnet. Der Gleitmetallring 31 ist in die Lagerschale 32 eingelegt. Hierzu weist die Lagerschale 32 im Beispiel eine axial offene Ringnut 33 auf. Der Gleitmetallring 31 liegt in der Ringnut 33. Die Tragplatte 26 liegt auf dem Gleitmetallring 31 auf und kann im Betrieb der Batterie 1 daran abgleiten. Der Gleitmetallring 31 besitzt einen Ringkörper 34, der aus einer Gleitmetalllegierung besteht, sowie zumindest einen metallischen Heizleiter 35, der im Ringkörper 34 angeordnet ist. Mit Hilfe des Heizleiters 35 kann der Ringkörper 34 aufgeheizt werden. Eine hier nicht gezeigte Stromversorgung des Heizleiters 35 kann so ausgestaltet sein, dass der Heizleiter 35 den Ringkörper 34 auf eine vorbestimmte Betriebstemperatur aufheizt, die einerseits unterhalb eines Schmelzpunkts der Gleitmetalllegierung liegt und die andererseits jedoch so nahe am Schmelzpunkt der Gleitmetalllegierung liegt, dass am Ringkörper 34 ein Oberflächenschmelzen auftritt. Beispielsweise liegt die Betriebstemperatur etwa 10% bis 20% unterhalb der Schmelztemperatur der Gleitmetalllegierung. Als Gleitmetalllegierung wird zweckmäßig eine niedrig-schmelzende Legierung verwendet, die einen Schmelzpunkt von maximal 250°C bis 350°C aufweisen kann. Durch das Aufheizen des Ringkörpers 34 auf die vorbestimmte Betriebstemperatur kommt es zu besagtem Oberflächenschmelzen beim Ringkörper 34, so dass sich eine außenliegende Oberfläche des Ringkörpers 34 zumindest im Bereich der Tragplatte 26 verflüssigt. Zum einen ergibt sich dadurch eine extrem reibungsarme hydraulische Gleitlagerung. Zum anderen verbessert sich dadurch signifikant der elektrische Kontakt zwischen Gleitmetallring 31 und Tragplatte 26, wodurch große Ströme bei geringen Spannungen übertragen werden können.

Die vorstehend genannte Stromversorgung des Heizleiters 35 kann durch eine separate Stromversorgung realisiert sein, die mit Hilfe der Steuereinrichtung 22 z.B. in Verbindung mit einem Temperatursensor gesteuert bzw. geregelt werden kann, um am Ringkörper 34 die gewünschte Betriebstemperatur einzustellen. In einem vereinfachten Fall kann die Stromversorgung auch mit Hilfe wenigstens eines PTC-Elements realisiert sein, das an geeigneter Stelle mit dem Heizleiter 35 in Reihe geschaltet ist. Denkbar ist insbesondere, den Heizleiter 35 in einen Strompfad zwischen der Tragplatte 26 und dem Axiallager 32 parallel einzubringen, ggf. einschließlich des jeweiligen PTC-Elements.

Gemäß einer anderen vorteilhaften Ausführungsform, die hier ebenfalls dargestellt ist, wird der Elektrolytpfad 17 so an der Anode 11 bzw. am Anodenkörper 12 vorbeigeführt, dass der Elektrolytstrom im Betrieb der Batterie 1 die drehbar gelagerte Anode 11 drehend antreibt. Hierzu kann der Elektrolyteinlass 18 tangential zum Elektrolytraum 10 angeordnet sein. Demnach erfolgt die Einströmung von Elektrolyt in den Elektrolytraum 17 nahe an der Kathode 7. Ferner kann vorgesehen sein, dass der Elektrolyteinlass 18 an einem ersten Endbereich des Elektrolytraums 10, hier distal zum Boden 4 bzw. im Einbauzustand oben angeordnet ist, während der Elektrolytauslass 19 an einem zweiten Endbereich des Elektrolytraums 10 angeordnet ist, der vom ersten Endbereich entfernt ist. Im Beispiel der Fig. 1 bzw. im Einbauzustand ist der Elektrolytauslass 19 proximal zum Boden 4 angeordnet, also unten angeordnet. Im gezeigten Beispiel ist der Elektrolytauslass 19 außerdem axial orientiert und durch den Boden 4 hindurchgeführt. Die Anordnung von Elektrolyteinlass 18 und Elektrolytauslass 19 an entgegengesetzten axialen Enden des Elektrolytraums 10 bewirkt eine axiale Durchströmung des Elektrolytraums 10 mit Elektrolyt. Die tangentiale Anordnung des Elektrolyteinlasses 18 erzeugt im Elektrolytraum 10 eine Drallströmung oder schraubenförmige Strömung, die schon aufgrund von Reibungseffekten die Anode 11 drehend antreibt. Die Drallströmung im Elektrolytraum 10 ermöglicht jedoch auch vergleichsweise hohe Strömungsgeschwindigkeiten bei einer vergleichsweise großen Verweildauer für das Elektrolyt im Elektrolytraum 10.

Im Beispiel ist die Anode 11 bzw. der Anodenkörper 12 an einer dem Elektrolytraum 10 ausgesetzten Außenseite 36 mit Strömungsleitstrukturen 37 ausgestattet. Die Strömungsleitstrukturen 37 sind dabei so gestaltet, dass sie ein Drehmoment auf die Anode 11 übertragen können, wenn die Anode 11 mit dem Elektrolytstrom beaufschlagt ist. Die Strömungsleitstrukturen 37 können somit kinetische Energie des Elektrolytstroms zum Antreiben der Anode 11 ausnutzen. Die Strömungsleitstrukturen 37 können beispielsweise durch schraubenförmige Schaufeln oder Schaufelabschnitte gebildet sein. Die Strömungsleitstrukturen 37 sind hier kumulativ zum tangentialen Elektrolyteinlass 18 vorgesehen, können aber auch alternativ dazu vorgesehen sein.

Während beim vorstehend beschriebenen Beispiel der Elektrolytstrom, der auf geeignete Weise erzeugt wird, zum drehenden Antreiben der Anode 11 genutzt wird, kann gemäß einer anderen Ausführungsform vorgesehen sein, die Rotation der Anode 11 zum Antreiben des Elektrolyts, also zum Erzeugen des Elektrolytstroms zu verwenden. Hierzu kann ein in Fig. 2 mit unterbrochener Linie angedeuteter Drehantrieb 56 vorgesehen sein, der die Anode 11 drehend antreibt. Im Beispiel treibt der Drehantrieb 56, bei dem es sich beispielsweise um einen Elektromotor handeln kann, die Tragplatte 26 an, die den Anodenkörper 12 trägt. In diesem Fall arbeiten die Strömungsleitstrukturen 37 wie Laufschaufeln einer axialen Strömungsmaschine, wie z.B. bei einem Propeller. Die angetriebene Anode 11 bildet in diesem Fall eine Elektrolytfördereinrichtung. Die Steuereinrichtung 22 kann über eine entsprechende Steuerleitung 23 mit dem Drehantrieb 56 elektrisch verbunden sein, um den Drehantrieb 56 bedarfsabhängig ansteuern zu können.

Gemäß Fig. 2 kann die Luftversorgungseinrichtung 20 stromauf des Lufteinlasses 15 eine Konzentrationseinrichtung 38 aufweisen, mit deren Hilfe der Sauerstoffanteil im Luftstrom erhöht werden kann. Die Konzentrationseinrichtung 38 kann dabei mittels geeigneter Filterstrukturen arbeiten, insbesondere Membranen und dergleichen. Dementsprechend besitzt der Luftstrom stromab der Konzentrationseinrichtung 38 einen signifikant erhöhten Sauerstoffanteil im Vergleich zum Luftstrom stromauf der Konzentrationseinrichtung 38. Über eine Abluftleitung 39 kann von der Konzentrationseinrichtung 38 ein Luftstrom mit entsprechend reduziertem Sauerstoffanteil bzw. erhöhtem Stickstoffanteil abgeführt werden. Die Luftversorgungseinrichtung 20 besitzt hier außerdem ein Gebläse 40 zum Antreiben bzw. zum Erzeugen des Luftstroms. Das Gebläse 40 kann durch die Steuereinrichtung 22 angesteuert werden. Zusätzlich kann ein hier nicht gezeigtes "normales" Luftfilter in der Luftversorgungseinrichtung 20 enthalten sein, mit dem flüssige und/oder feste Verunreinigungen aus der Luft herausgefiltert werden können.

Die Elektrolytversorgungseinrichtung 21 ist gemäß Fig. 2 mit einem geschlossenen Elektrolytkreis 41 ausgestattet, der einen Vorlauf 42 sowie einen Rücklauf 43 umfasst. Der Vorlauf 42 verbindet einen Elektrolyttank 44 zur Bevorratung des Elektrolyts, fluidisch mit dem Elektrolyteinlass 18. Im Vorlauf 42 ist eine Vorlaufpumpe 45 angeordnet, die mit Hilfe der Steuereinrichtung 22 ansteuerbar ist. Der Rücklauf 43 verbindet den Elektrolytauslass 19 fluidisch mit dem Elektrolyttank 44 und enthält eine Rücklaufpumpe 46, die mit Hilfe der Steuereinrichtung 22 ansteuerbar ist. Vorlaufpumpe 45 und Rücklaufpumpe 46 bilden dabei Elektrolytfördereinrichtungen.

Im Rücklauf 43 ist außerdem stromab der Rücklaufpumpe 46 eine Elektrolytreinigungseinrichtung 47 angeordnet, mit deren Hilfe sich Reaktionsprodukte aus dem Elektrolyt entfernen lassen. Somit erfolgt innerhalb der Elektrolytreinigungseinrichtung 47 eine Aufbereitung des Elektrolyts, so dass gereinigtes bzw. unverbrauchtes Elektrolyt dem Elektrolyttank 44 zugeführt werden kann. Die Elektrolytreinigungseinrichtung 47 kann beispielsweise als Zentrifuge, insbesondere mit einer Membran, ausgestaltet sein. Die Zentrifuge kann dabei als Rückstrahlzentrifuge ausgestaltet sein, die durch die kinetische Energie des Elektrolytstroms angetrieben ist.

Im Rücklauf 43 kann außerdem eine Gasabscheideeinrichtung 48 angeordnet sein, mit deren Hilfe Gase aus dem flüssigen Elektrolyt abgeschieden werden können. Im Beispiel ist die Gasabscheideeinrichtung 48 stromab der Rücklaufpumpe 46 bzw. stromab der Elektrolytreinigungseinrichtung 47 angeordnet. Beim abgeschiedenen Gas handelt es sich insbesondere um Wasserstoffgas, das bei der Elektrolytreaktion im Elektrolytraum 10 entsteht. Die Gasabscheideeinrichtung 48 kann zur verbesserten Gasabscheidung mehrere Düsen enthalten, durch die das flüssige Elektrolyt hindurchgedrückt wird. Es hat sich gezeigt, dass die Düsen eine Blasenbildung verstärken, was die Abscheidung des Gases aus dem flüssigen Elektrolyt vereinfacht.

Die Gasabscheideeinrichtung 48 ist über eine Gasleitung 49 mit einer Umsetzeinrichtung 50 fluidisch verbunden, mit deren Hilfe die chemische Energie des abgeschiedenen Gases in elektrische und/oder thermische Energie gewandelt werden kann. Beispielsweise handelt es sich bei der Umsetzeinrichtung 50 um einen katalytischen Brenner, so dass die brennbaren Gase exotherm umgesetzt werden, um Wärme zu erzeugen. Alternativ kann es sich bei der Umsetzeinrichtung 50 um eine Wasserstoff-Luft-Brennstoffzelle handeln, die abgeschiedenes Wasserstoffgas mit Hilfe von Luftsauerstoff in Wärme und elektrische Energie wandelt. Die mit Hilfe der Umsetzeinrichtung 50 aus den abgeschiedenen Gasen gewandelte Energie kann entsprechend einem Pfeil 51 der Batterie 1 oder dem jeweiligen übergeordneten System, also insbesondere dem Fahrzeug, zugeführt werden.

Des Weiteren kann im Rücklauf 43 ein Wärmeübertrager 55 angeordnet sein, mit dessen Hilfe das rückgeführte Elektrolyt gekühlt werden kann. Die dabei abgeführte Wärme kann entweder der Reaktionszone innerhalb des Elektrolytraums 10 oder dem der Batterie 1 übergeordneten System, insbesondere dem Fahrzeug, zugeführt werden. Im Beispiel der Fig. 2 ist der Wärmeübertrager 55 in die Gasabscheideeinrichtung 48 integriert.

Gemäß Fig. 1 kann zur Vergrößerung einer Verweildauer des Luftstroms im Luftraum 9 vorgesehen sein, zumindest den Lufteinlass 15 tangential zum Luftraum 9 anzuordnen. Ferner sind Lufteinlass 15 und Luftauslass 16 an voneinander entfernten Enden des Luftraums 9 angeordnet. Bevorzugt ist dabei eine im Vergleich zum Elektrolytpfad 17 umgekehrte Anordnung, so dass sich für den Elektrolytpfad 17 und den Luftpfad 14 das sogenannte Gegenstromprinzip realisieren lässt. Demnach ist im Beispiel der Lufteinlass 15 proximal zum Boden 4 angeordnet, während der Luftauslass 16 distal zum Boden 4 angeordnet ist.

Zum Beheizen der Anode 11 bzw. des Anodenkörpers 12 kann eine Induktionsheizung 52 vorgesehen sein, die im Beispiel im Bereich der Kathode 7 angeordnet ist. Mit Hilfe der Induktionsheizung 52 lässt sich die Anode 11 bzw. der Anodenkörper 12 zum einen berührungslos aufheizen. Zum anderen erfolgt die Aufheizung gezielt im Bereich der dem Elektrolytraum 10 zugewandten Außenseite 36, die auch dem Elektrolytstrom ausgesetzt ist. Somit erfolgt die Erwärmung gezielt dort, wo eine erhöhte Temperatur für eine verbesserte Elektrolytreaktion erwünscht ist. Die Induktionsheizung 52 ist insbesondere so ausgestaltet, dass ein stehendes elektromagnetisches Feld mit in der Umfangsrichtung abwechselnder magnetischer Polarisierung erzeugt wird, das erst bei einer Relativbewegung der Anode 11 zur gewünschten oberflächlichen Aufheizung der Anode 11 bzw. des Anodenkörpers 12 durch Induktion erfolgt. Die Relativbewegung der Anode 11 erfolgt dabei durch die Drehung der Anode 11 um ihre Längsmittelachse 13. Die induktive Aufheizung ist dabei drehzahlgesteuert, wobei die Drehzahl der Anode 11 vom Volumenstrom des Elektrolyts abhängt.

Obwohl beim hier gezeigten, bevorzugten Beispiel im Gehäuse 2 nur eine einzige Kathode 7 und nur eine einzige Anode 11 angeordnet sind, kann bei einer anderen Ausführungsform vorgesehen sein, in demselben Gehäuse 2 mehrere Kathoden 7 und mehrere Anoden 11 anzuordnen. Ebenso ist denkbar, in derselben Kathode 7 mehrere Anoden 11 anzuordnen.

Ein in Fig. 2 global mit 57 bezeichnetes Batterie-System umfasst mindestens zwei Metall-Luft-Batterien 1 der vorstehend beschriebenen Art, wobei jedoch die peripheren Aggregate bzw. Komponenten gemeinsam genutzt werden können. Zum Beispiel können mehrere Batterien 1 mit einer gemeinsamen Luftversorgungseinrichtung 20 mit dem jeweiligen Luftstrom versorgt werden. Ferner können mehrere Batterien 1 mit einer gemeinsamen Elektrolytversorgungseinrichtung 21 mit dem jeweiligen Elektrolytstrom versorgt werden. Insbesondere kann eine gemeinsame Steuereinrichtung 22 verwendet werden, um mehrere Batterien 1 bzw. das Batterie-System 57 zu betreiben. Insbesondere können dann auch gemeinsame Fördereinrichtungen zum Erzeugen der Luftströme bzw. Elektrolytströme für die einzelnen Batterien 1 verwendet werden. Die Batterien 1 können elektrisch in Reihe oder parallel geschaltet sein. Unabhängig davon können die Elektrolytpfade 17 der Batterien 1 fluidisch parallel oder seriell angeordnet sein. Beispielsweise kann ein gemeinsamer Elektrolytkreis 41 vorgesehen sein, in den mehrere Batterien 1 fluidisch eingebunden sind, so dass sich weitere Komponenten des Elektrolytkreises 41 gemeinsam nutzen lassen, wie z.B. die Elektrolytreinigungseinrichtung 47 und/oder die Gasabscheideeinrichtung 48. Ebenso können die Luftpfade 14 der Batterien 1 fluidisch parallel oder seriell angeordnet sein, wobei sich auch hier weitere Komponenten der Luftversorgungseinrichtung 20 gemeinsam nutzen lassen, wie z.B. die Konzentrationseinrichtung 38 oder ein Luftfilter.

Ein Fahrzeug, das einen elektromotorischen Antrieb besitzt, kann mit wenigstens einer Batterie 1 der vorstehend beschriebenen Art oder mit vorstehend beschriebenem Batterie-System 57 ausgestattet sein, um elektrische Energie für den jeweiligen Elektromotor bereitzustellen. Von besonderem Vorteil ist dabei, dass die hier vorgestellte Batterie 1 aufgrund ihrer hydraulischen bzw. hydropneumatischen Leistungssteuerung bzw. Leistungsregelung grundsätzlich ungepuffert mit dem jeweiligen Stromverbraucher des Fahrzeugs bzw. mit einer entsprechenden Leistungselektronik elektrisch verbunden sein kann, so dass insbesondere auf schwere Akkumulatoren und dergleichen verzichtet werden kann.

Zum Betreiben einer derartigen Metall-Luft-Batterie 1 bzw. eines solchen Batterie-Systems 57 kann nun vorgesehen sein, dass abhängig von einer aktuellen Leistungsanforderung an die Metall-Luft-Batterie 1 bzw. an das Batterie-System 57 ein dazu passender Elektrolytstrom und/oder ein dazu passender Luftstrom für die jeweilige Batterie 1 erzeugt wird/werden. Zweckmäßig kann hierzu vorgesehen sein, dass zum Anpassen des Elektrolytstroms die jeweilige Elektrolytfördereinrichtung, also vorzugsweise die Elektrolytpumpen 45, 46 bzw. die drehend angetriebene Anode 11, entsprechend zum Erhöhen oder Reduzieren ihrer Förderleistung angesteuert wird, und/oder dass zum Anpassen des Luftstroms die jeweilige Luftfördereinrichtung, also vorzugsweise das Gebläse 40, entsprechend zum Erhöhen oder zum Reduzieren ihrer Förderleistung angesteuert wird.

Die Anode 11 kann gemäß Fig. 1 und entsprechend einer besonders vorteilhaften Ausführungsform so hergestellt sein, dass ihr Anodenkörper 12 in einer Matrix 53 aus Natrium aufweist, in die Partikel 54 aus einer Aluminiumlegierung eingebettet sind. Hierbei handelt es sich somit nicht um eine Aluminium-Natrium-Legierung, sondern um ein Aluminium-Natrium-Kompositmaterial. Erreicht wird dies dadurch, dass ein Granulat aus der Aluminiumlegierung, das die Partikel 54 bildet, in eine Schmelze aus Natrium eingebracht wird, das dabei die Matrix 53 bildet. Mit Hilfe dieser Natriumschmelze, welche die Partikel 54 aus der Aluminiumlegierung enthält, kann die Anode 11 bzw. der Anodenkörper 12 gegossen werden.

Die Partikel 54 können beispielsweise eine Partikelgröße von 10 µm bis 100 µm besitzen. Bevorzugt ist eine Partikelgröße von 40 µm bis 60 µm. Besonders bevorzugt ist eine Partikelgröße von etwa 50 µm. Der Anteil der Partikel 54 im Anodenkörper 12 liegt vorzugsweise in einem Bereich von 40% bis 80%. Vorteilhaft ist ein Partikelanteil von 60% bis 70%. Besonders bevorzugt ist ein Partikelanteil von etwa 65%. Gemeint sind hier Gewichtsprozent.

Die Aluminiumlegierung, aus der die Partikel 54 hergestellt sind, kann gemäß einer vorteilhaften Ausführungsform Zirkon enthalten. Es hat sich gezeigt, dass Zirkon in der Aluminiumlegierung die Ausbildung einer Sperrschicht an der Außenseite 36 des Anodenkörpers 12 gerade so weit reduziert, dass eine direkte Umsetzung von Aluminium mit Wasser zu Aluminiumoxid und Wasserstoff weitgehend unterbleibt. Bevorzugt enthält die Aluminiumlegierung 0,01% bis 1,00% Zirkon. Bevorzugt ist ein Zirkonanteil von 0,05% bis 0,8%. Besonders vorteilhaft ist ein Zirkonanteil von etwa 0,5%. Die vorstehenden Prozentangaben sind dabei Gewichtsprozent. Die Aluminiumlegierung besteht im Übrigen ausschließlich aus Aluminium, abgesehen von herstellungsbedingt unvermeidbaren Verunreinigungen.

Das hier bevorzugt zum Einsatz kommende Elektrolyt besteht aus einer wässrigen Säure oder einer wässrigen Lauge, der zumindest ein Halogen und zumindest ein Tensid hinzugefügt ist. Halogene sind Fluor, Chlor, Brom, Jod, Astat und Ununseptium. In Frage kommen für das Elektrolyt dabei vor allem Fluor, Chlor, Brom und Jod. Bevorzugt wird dabei Fluor. Die Halogene kommen dabei nicht in Reinform zum Einsatz, sondern in Form von Fluorverbindungen, insbesondere in Form von fluorhaltigen Salzen, sogenannte Fluoride. Tenside sind Substanzen, die die Oberflächenspannung einer Flüssigkeit oder die Grenzflächenspannung zwischen zwei Phasen herabsetzen und die Bildung von Dispersionen ermöglichen oder unterstützen bzw. als Lösungsvermittler wirken.

Die für das Elektrolyt verwendete Säure oder Lauge besitzt in Wasser eine Konzentration von 10% bis 40%. Bevorzugt ist dabei eine Konzentration im Bereich von 15% bis 25%. Besonders vorteilhaft ist eine Konzentration von etwa 20%. Das Halogen besitzt innerhalb der Säure oder Lauge einen Anteil von 0,1% bis 4,0%. Bevorzugt ist ein Halogenanteil von 0,5% bis 2,0%. Ein bevorzugtes Halogen ist dabei Kaliumaluminiumfluorid. Das Tensid besitzt in der Säure oder Lauge einen Anteil von 0,1% bis 2,0%. Bevorzugt ist ein Tensidanteil von 0.2% bis 1,0%. Als Tensid ist bevorzugt Natriumlaurylsulfat. Die vorstehenden Prozentangaben sind jeweils als Gewichtsprozent zu verstehen.

## Patentansprüche

1. Metall-Luft-Batterie, vorzugsweise Aluminium-Luft-Batterie,
- mit einer Kathode (7),
- mit einer Anode (11), und
- mit einem zwischen der Kathode (7) und der Anode (11) angeordneten Elektrolyt, das aus einer wässrigen Säure oder wässrigen Lauge besteht, die wenigstens ein Halogen und wenigstens ein Tensid enthält,
**dadurch gekennzeichnet,**
**dass** die Anode (11) einen Anodenkörper (12) aufweist, der in einer Matrix (53) aus Natrium Partikel (54) aus einer Aluminiumlegierung enthält.

2. Batterie nach Anspruch 1,
**dadurch gekennzeichnet,**
**dass** die Partikel (54) eine Partikelgröße von 10 µm bis 100 µm aufweisen.

3. Batterie nach Anspruch 1,
**dadurch gekennzeichnet,**
**dass** die Partikel (54) eine Partikelgröße von 40 µm bis 60 µm aufweisen.

4. Batterie nach einem der Ansprüche 1 bis 3,
**dadurch gekennzeichnet,**
**dass** ein Anteil von Partikeln (54) im Anodenkörper (12) in einem Bereich von 40 Gewichtsprozent bis 80 Gewichtsprozent liegt.

5. Batterie nach einem der Ansprüche 1 bis 3
**Dadurch gekennzeichnet,**
**dass** ein Anteil von Partikeln (54) im Anodenkörper (12) in einem Bereich von 60 Gewichtsprozent bis 70 Gewichtsprozent liegt.

6. Batterie nach einem der Ansprüche 1 bis 5,
**dadurch gekennzeichnet,**
**dass** die Aluminiumlegierung Zirkon enthält.

7. Batterie nach Anspruch 6,
**dadurch gekennzeichnet,**
**dass** die Aluminiumlegierung 0,01 Gewichtsprozent bis 1,00 Gewichtsprozent Zirkon enthält.

8. Batterie nach Anspruch 7,
**dadurch gekennzeichnet,**
**dass** die Aluminiumlegierung 0,05 Gewichtsprozent bis 0,80 Gewichtsprozent Zirkon enthält.

9. Batterie nach einem der Ansprüche 1 bis 8,
**dadurch gekennzeichnet,**
**dass** die Säure oder Lauge 10 Gewichtsprozent bis 40 Gewichtsprozent Anteil in Wasser aufweist.

10. Batterie nach einem der Ansprüche 1 bis 9,
**dadurch gekennzeichnet,**
**dass** das Halogen 0,1 Gewichtsprozent bis 4,0 Gewichtsprozent Anteil in der Säure oder Lauge aufweist.

11. Batterie nach Anspruch 10,
**dadurch gekennzeichnet,**
**dass** das Halogen 0,5 Gewichtsprozent bis 2,0 Gewichtsprozent Anteil in der Säure oder Lauge aufweist.

12. Batterie nach einem der Ansprüche 1 bis 11,
**dadurch gekennzeichnet,**
**dass** das Halogen ein Fluorid ist.

13. Batterie nach einem der Ansprüche 1 bis 12,
**dadurch gekennzeichnet,**
**dass** das Tensid einen Anteil von 0,1 Gewichtsprozent bis 2,0 Gewichtsprozent in der Säure oder Lauge aufweist.

14. Batterie nach Anspruch 13,
**dadurch gekennzeichnet,**
**dass** das Tensid einen Anteil von 0,2 Gewichtsprozent bis 1,0 Gewichtsprozent in der Säure oder Lauge aufweist.

15. Batterie nach einem der Ansprüche 1 bis 14,
**dadurch gekennzeichnet,**
**dass** das Tensid Natriumlaurylsulfat ist.

## Claims

1. Metal-air battery, preferably an aluminium-air battery, comprising
- a cathode (7),
- an anode (11) and
- an electrolyte disposed between the cathode (7) and the anode (11), which electrolyte consists of an aqueous acid or an aqueous lye including at least one halogen and at least one surfactant,
**characterised in that**
the anode (11) comprises an anode body (12) which in a matrix (53) of sodium includes particles (54) of an aluminium alloy.

2. Battery according to claim 1,
**characterised in that**
the particles (54) have a particle size of 10 µm to 100 µm.

3. Battery according to claim 1,
**characterised in that**
the particles (54) have a particle size of 40 µm to 60 µm.

4. Battery according to any of claims 1 to 3,
**characterised in that**
a proportion of the particles (54) in the anode body (12) is in a range of 40 wt.% to 80 wt.%.

5. Battery according to any of claims 1 to 3,
**characterised in that**
a proportion of the particles (54) in the anode body (12) is in a range of 60 wt.% to 70 wt.%.

6. Battery according to any of claims 1 to 5,
**characterised in that**
the aluminium alloy includes zirconium.

7. Battery according to claim 6,
**characterised in that**
the aluminium alloy includes 0.01 wt.% to 1.00 wt.% zirconium.

8. Battery according to claim 7,
**characterised in that**
the aluminium alloy includes 0.05 wt.% to 0.80 wt.% zirconium.

9. Battery according to any of claims 1 to 8,
**characterised in that**
the acid or lye 10 comprises a proportion in water of 10 wt.% to 40 wt.%.

10. Battery according to any of claims 1 to 9,
**characterised in that**
the halogen comprises a proportion in the acid or lye of 0.1 wt.% to 4.0 wt.%.

11. Battery according to claim 10,
**characterised in that**
the halogen comprises a proportion in the acid or lye of 0.5 wt.% to 2.0 wt.%.

12. Battery according to any of claims 1 to 11,
**characterised in that**
the halogen is a fluoride.

13. Battery according to any of claims 1 to 12,
**characterised in that**
the surfactant comprises a proportion in the acid or lye of 0.1 wt.% to 2.0 wt.%.

14. Battery according to claim 13,
**characterised in that**
the surfactant comprises a proportion in the acid or lye of 0.2 wt.% to 1.0 wt.%.

15. Battery according to any of claims 1 to 14,
**characterised in that**
the surfactant is sodium lauryl sulphate.

## Revendications

1. Pile métal-air, de préférence, pile aluminium-air,
- avec une cathode (7),
- avec une anode (11), et
- avec un électrolyte disposé entre la cathode (7) et l'anode (11) qui est constitué d'un acide aqueux ou d'une solution alcaline aqueuse, qui inclut au moins un halogène et au moins un tensioactif,
**caractérisée en ce que**
l'anode (11) présente un corps d'anode (12) qui inclut, dans une matrice (53) de sodium, des particules (54) d'un alliage d'aluminium.

2. Pile selon la revendication 1,
**caractérisée en ce que**,
les particules (54) présentent une taille de particule de 10 µm à 100 µm.

3. Pile selon la revendication 1,
**caractérisée en ce que**,
les particules (54) présentent une taille de particule de 40 µm à 60 µm.

4. Pile selon l'une quelconque des revendications 1 à 3,
**caractérisée en ce que**,
une proportion de particules (54) dans le corps d'anode (12) se situe dans une plage de 40 % en poids à 80 % en poids.

5. Pile selon l'une quelconque des revendications 1 à 3,
**caractérisée en ce que**,
une proportion de particules (54) dans le corps d'anode (12) se situe dans une plage de 60 % en poids à 70 % en poids.

6. Pile selon l'une quelconque des revendications 1 à 5,
**caractérisée en ce que**,
l'alliage d'aluminium inclut du zircon.

7. Pile selon la revendication 6,
**caractérisée en ce que**,
l'alliage d'aluminium inclut 0,01 % en poids à 1,00 % en poids de zircon.

8. Pile selon la revendication 7,
**caractérisée en ce que**,
l'alliage d'aluminium inclut 0,05 % en poids à 0,80 % en poids de zircon.

9. Pile selon l'une quelconque des revendications 1 à 8,
**caractérisée en ce que**,
l'acide ou la solution alcaline présente 10 % en poids à 40 % en poids en proportion d'eau.

10. Pile selon l'une quelconque des revendications 1 à 9,
**caractérisée en ce que**,
l'halogène présente 0,1 % en poids à 4,0 % en poids en proportion dans l'acide ou la solution alcaline.

11. Pile selon la revendication 10,
**caractérisée en ce que**,
l'halogène présente 0,5 % en poids à 2,0 % en poids en proportion dans l'acide ou la solution alcaline.

12. Pile selon l'une quelconque des revendications 1 à 11,
**caractérisée en ce que**,
l'halogène est un fluorure.

13. Pile selon l'une quelconque des revendications 1 à 12,
**caractérisée en ce que**,
le tensioactif présente une proportion de 0,1 % en poids à 2,0 % en poids dans l'acide ou la solution alcaline.

14. Pile selon la revendication 13,
**caractérisée en ce que**,
le tensioactif présente une proportion de 0,2 % en poids à 1,0 % en poids dans l'acide ou la solution alcaline.

15. Pile selon l'une quelconque des revendications 1 à 14,
**caractérisée en ce que**,
le tensioactif est du laurylsulfate de sodium.
